# EUROPEAN PATENT APPLICATION

(11) **EP 2 940 338 A1**
(43) Date of publication of application: **04.11.2015**
(21) Application number: 15161845.1
(22) Date of filing: 31.03.2015
(51) Int. Cl.: F16D 41/066

(54) **Unidirectional clutch device**

(30) Priority: 02.04.2014 TW 103205662 U
(71) Applicant: NU Flyer Co., Ltd., Tainan City (TW)
(72) Inventor: Lin, Yu-Tsai, Tainan City (TW)
(74) Representative: Viering, Jentschura & Partner Patent- und Rechtsanwälte

(57) **Abstract**

A unidirectional clutch device has a driving board (10), multiple permanent magnets (20), and multiple clutching elements (30). The driving board (10) has an axle hole (11) and multiple holding recesses (12). The holding recesses (12) are arranged around and communicate with the axle hole (11). Each holding recess (12) has a long end (122) and a narrow end (121). The permanent magnets (20) are mounted on the driving board (10) and are located at positions adjacent to the narrow ends (121). The clutching elements (30) are rotatably mounted respectively in the holding recesses (12) and are made of a magnetically conductive material. Each clutching element (30) is moveable in a corresponding one of the holding recesses (12) toward the narrow end (121) of the corresponding holding recess (12) by an attraction of a corresponding permanent magnet (20).

## Description

### 1. Field of the Invention

The present invention relates to a clutch device, and more particularly to a unidirectional clutch device that is applied to an actuating device of a vehicle.

### 2. Description of Related Art

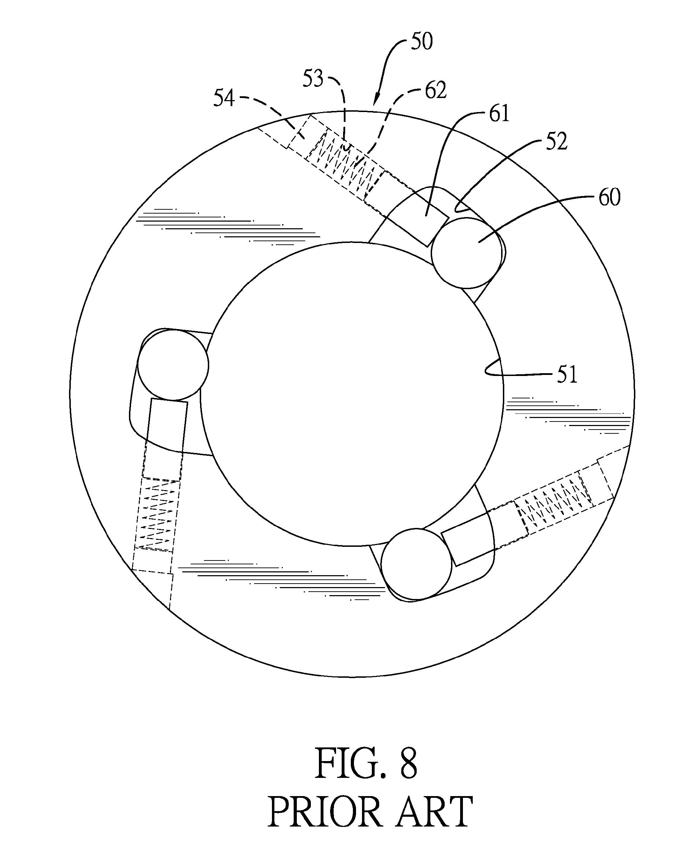

A unidirectional clutch device is usually applied to an actuating device of a vehicle. With reference to Fig. 8, a conventional clutch device comprises a round driving board 50, multiple clutch blocks 60, multiple springs 62, and multiple pushing blocks 61. The driving board 50 has an axle hole 51, multiple holding recesses 52, and multiple spring holes 53. The axle hole 51 is axially defined through the driving board 50. The holding recesses 52 are defined in the driving board 50 and are arranged around and communicate with the axle hole 51, and the clutch blocks 60 are mounted respectively in the holding recesses 52. The spring holes 53 are defined inclinedly in the periphery of the driving board 50, and each spring hole 53 has an end extending to and communicating with one of the holding recesses 52. The springs 62 and the pushing blocks 61 are mounted respectively in the spring holes 53, and multiple closing blocks 54 are mounted respectively in the spring holes 53 to close the ends of the spring holes 53 opposite the holding recesses 52. Accordingly, the pushing blocks 61 are pushed by the springs 62 to abut against the clutching blocks 60.

When the conventional clutch device is applied to a vehicle, the driving board 50 is connected with a power output end of an actuating device of the vehicle. A transmission axle of the vehicle connected to an engine of the vehicle is mounted through the axle hole 51 and abuts the clutch blocks 60. When the actuating device is actuated, the driving board is rotated by the actuating device. With the clutch blocks 60 clamping and abutting the transmission axle, the transmission axle is rotated, and the engine is actuated. After the engine is actuated and in operation, the rotation speed of the transmission axle driven by the engine is faster than that of the driving board 50 driven by the actuating device. Thus, rotation speed difference between the transmission axle and the driving board 50 will make the transmission axle push the clutch blocks 60 to move and to compress the springs 62 via the pushing blocks 61. Accordingly, the transmission axle can rotate over the clutch blocks 60 and rotate freely relative to the driving board 50, and the power provided by the engine can be kept from being transmitted to the actuating device.

However, the conventional unidirectional clutch device has a complicated structure and is laborious in assembling. In addition, noise will be generated due to the friction between the springs 62, the pushing blocks 61, and the clutch blocks 60. The clutch blocks 60 are also easily worn off, and the useful life of the clutch device is reduced.

Furthermore, restricted by the arrangement of the inclined spring holes 53, only three spring holes 53 can be defined in the round driving board 50. If more than three spring holes 53 and holding recesses 52 are implemented on the driving board 50, the structural strength of the driving board 50 is reduced, and to set up more than three sets of holding recesses 52, clutch blocks 60, springs 62, and pushing blocks 61 on the driving board 50 is difficult. Therefore, the load applied to the conventional clutch device is born by the three clutch blocks 60, so each clutch block 60 has to bear a large portion of the load and is easily damaged.

To overcome the shortcomings, the present invention tends to provide a unidirectional clutch device to mitigate or obviate the aforementioned problems.

The main objective of the invention is to provide a unidirectional clutch device having a simplified structure, being easy in assembling, and having a capability of avoid generation of noise.

The unidirectional clutch device has a driving board, multiple permanent magnets, and multiple clutching elements. The driving board has an axle hole and multiple holding recesses. The axle hole is defined axially through the driving board. The holding recesses are defined in the driving board and are arranged around and communicate with the axle hole. Each holding recess has a long end having a radial width and a narrow end having a radial width smaller than that of the long end. The permanent magnets are mounted on the driving board. Each permanent magnet is located at a position adjacent to the narrow end of a respective one of the holding recesses. The clutching elements are rotatably mounted respectively in the holding recesses and are made of a magnetically conductive material. Each clutching element is moveable in a corresponding one of the holding recesses toward the narrow end of the corresponding holding recess by an attraction of a corresponding one of the permanent magnets.

Other objects, advantages and novel features of the invention will become more apparent from the following detailed description when taken in conjunction with the accompanying drawings.

### IN THE DRAWINGS

Fig. 1 is a side view of a first embodiment of a clutch device in accordance with the present invention;
Fig. 2 is a side view of a second embodiment of a clutch device in accordance with the present invention;
Fig. 3 is a side view of a third embodiment of a clutch device in accordance with the present invention;
Fig. 4 is a side view of a fourth embodiment of a clutch device in accordance with the present invention;
Fig. 5 is an enlarged side view in partial section of the clutch device along the line 5-5 in Fig. 4;
Fig. 6 is an operational side view of the clutch device in Fig. 1;
Fig. 7 is another operational side view of the clutch device in Fig. 1; and
Fig. 8 is a side view of a conventional clutch device in accordance with the prior art.

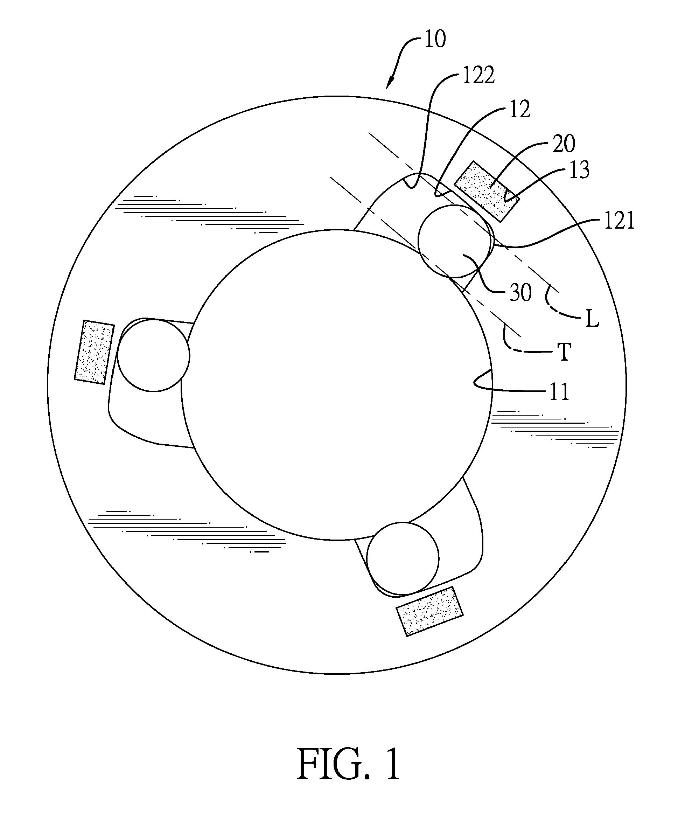

With reference to Fig. 1, a unidirectional clutch device in accordance with the present invention comprises a driving board 10, multiple permanent magnets 20, and multiple clutching elements 30.

The driving board 10 may be a round disk, is made of a non-magnetic material, and comprises an axle hole 11, multiple holding recesses 12, and multiple magnet recesses 13. The axle hole 11 is defined axially through the driving board 10. The holding recesses 12 are defined in the driving board 10 and are arranged around and communicate with the axle hole 11, and each holding recess 12 has a mouth and an inclined radial bottom. The mouth communicates with the axle hole 11. The radial bottom is away from and opposite the mouth and is inclined relative to a line L that is parallel with a tangent line T of the axle hole 11 to form a long end 122 and a narrow end 121 respectively on two ends of the holding recess 12. The long end 122 of the holding recess 12 has a radial width longer than that of the narrow end 121.

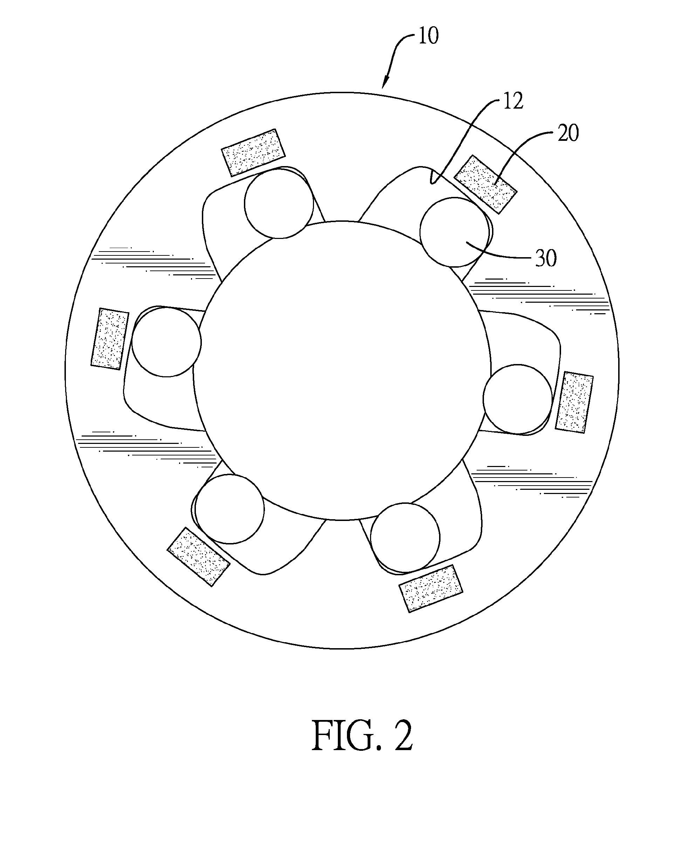

With reference to Figs. 1 and 2, in preferred embodiments, at least three holding recesses 12 are implemented. The number of the holding recess 12 can be increased if the load applied to the clutch device is increased. Therefore, four, five, six, or more than six holding recesses 12 can also be implemented.

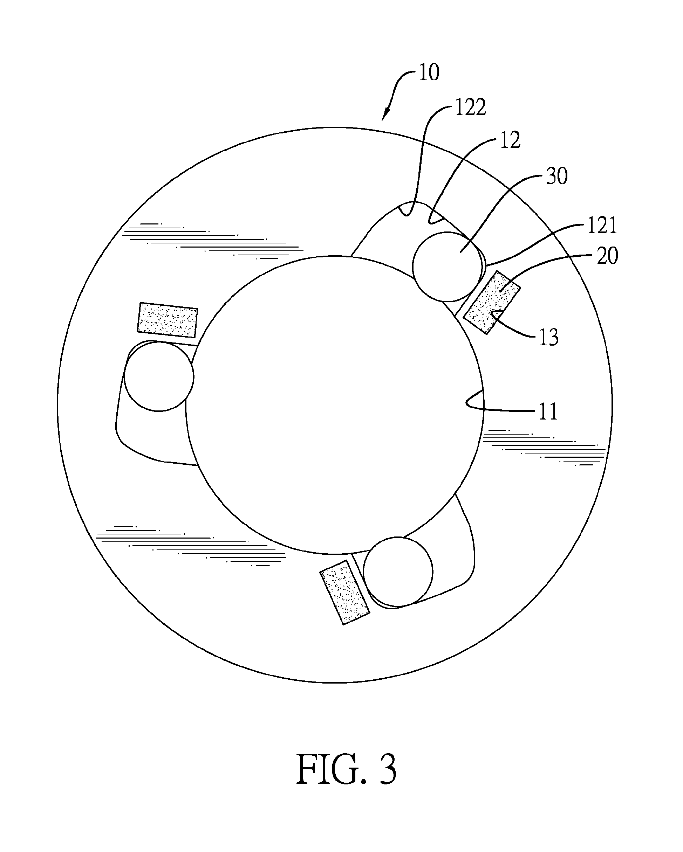

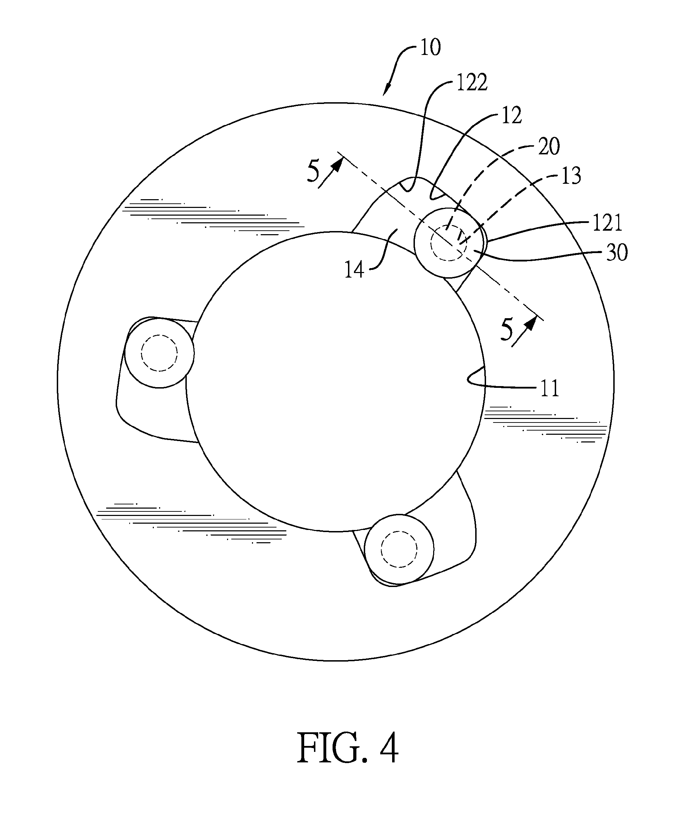

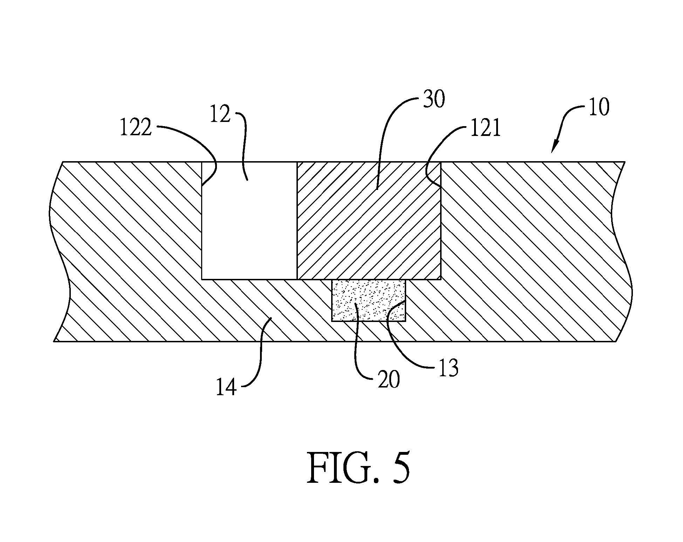

With reference to Fig. 1, the magnet recesses 13 are defined in the driving board 10 at positions respectively adjacent to the narrow ends 121 of the holding recesses 12. In the embodiment shown in Fig. 1, each magnet recess 13 is located at a position adjacent to the radial bottom of a corresponding one of the holding recesses 12. In the embodiment shown in Fig. 3, each magnet recess 13 is located at a position adjacent to the narrow end 121 and away from and opposite the long end 122 of a corresponding one of the holding recesses 12. With reference to Figs. 4 and 5, each holding recess 12 is kept from being defined through the driving board 10 to form an axial bottom 14 in the holding recess 12. The magnet recesses 13 are defined respectively in the axial bottoms 14 of the holding recesses 12 at positions respectively adjacent to the narrow ends 121 of the holding recesses 12.

With reference to Figs. 1, 3 and 4, the permanent magnets 20 are mounted respectively in the magnet recesses 13. The permanent magnets 20 may be integral parts of the driving board 10 that are magnetized to form permanent magnets. In another embodiment, the permanent magnets 20 are individual elements and mounted respectively in the magnet recesses 13.

With reference to Figs. 1, 3 and 4, the clutching elements 30 are made of a magnetically conductive material, so the clutching elements 30 can be attracted by the magnets 20. The clutching elements 30 may be spherical or cylindrical. Each clutching element 30 is rotatably mounted in one of the holding recesses 12, and is moveable between the narrow end 121 and the long end 122 of the holding recess 12. The clutching element 30 has a diameter larger than the radial width of the narrow end 121 but is shorter than the radial width of the long end 122 of the corresponding holding recess 12, such that the clutching element 30 can partially extend into the axle hole 11 when the clutching element 30 is at a position near the narrow end 121. In addition, when the clutching elements 30 are cylindrical, the axis of the cylindrical clutching element 30 is parallel with the axis of the axle hole 11.

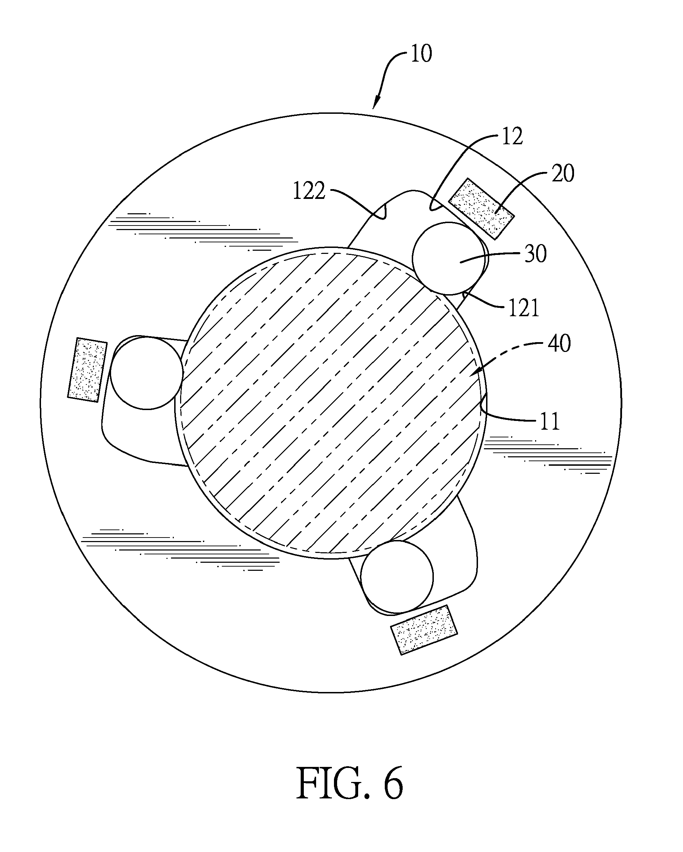

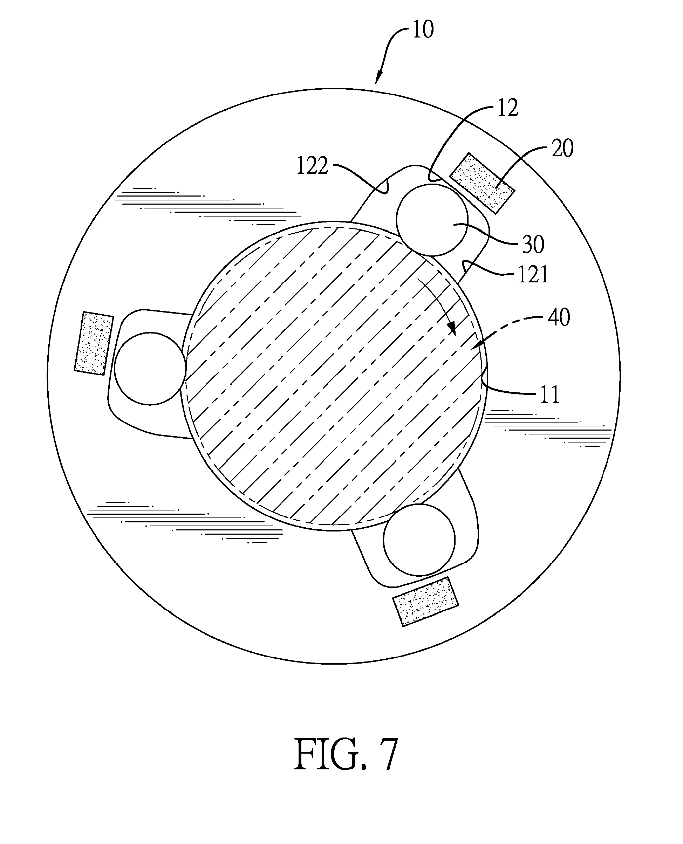

With reference to Figs. 1, 6 and 7, when the unidirectional clutch device is applied to a vehicle, the driving board 10 is connected with a power output end of an actuating device of the vehicle. A transmission axle 40 connected to an engine of the vehicle is mounted through the axle hole 11. When the actuating device is actuated, the driving board 10 is rotated by the actuating device. With the attraction by the permanent magnets 20, the clutching elements 30 will be moved to positions adjacent to the narrow ends 121 of the holding recesses 12 and abut against the transmission axle 40, such that the transmission axle 40 is clamped by the clutching elements 30 and is rotated by the driving board 10 to actuate the engine of the vehicle. When the engine is actuated and in operation, the rotation speed of the transmission axle 40 driven by the engine is faster than that of the driving board 10 driven by the actuating device. Thus, rotation speed difference between the transmission axle 40 and the driving board 10 and the centrifugal force of the clutching elements 30 will make the transmission axle 40 push the clutching elements 30 to move away from the narrow ends 121 and the permanent magnets 20. Accordingly, the transmission axle 40 will rotate over the clutching elements 30 and can rotate freely relative to the driving board 10, and the power provided by the engine can be kept from being transmitted to the actuating device.

With such an arrangement, the number of components of the unidirectional clutch device in accordance with the present invention can be effectively reduced, so the unidirectional clutch device has a simplified structure and is labor-saving in assembling. Because the unidirectional clutch device in accordance with the present invention does not have any springs and pushing blocks, so no friction will be generated between the clutching elements 30 and the permanent magnets 20 and noise can be effectively prevented. In addition, the clutching elements 30 are moved by the magnetic force provided by the magnets 20, the clutching elements 30 can be kept from being worn off, so the useful life of the clutch device can be prolonged.

Furthermore, because more than three clutching elements 30 can be implemented, the load applied to each clutching element 30 can be effectively reduced.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A unidirectional clutch device, **characterized in that** the unidirectional clutch device comprises:
a driving board (10) having:
an axle hole (11) defined axially through the driving board (10); and
multiple holding recesses (12) defined in the driving board (10) and arranged around and communicating with the axle hole (11), and each holding recess (12) having a long end (122) having a radial width and a narrow end (121) having a radial width smaller than the radial width of the long end (122);
multiple permanent magnets (20) mounted on the driving board (10), and each permanent magnet (20) located at a position being adjacent to the narrow end (121) of a respective one of the holding recesses (12); and
multiple clutching elements (30) rotatably mounted respectively in the holding recesses (12) and made of a magnetically conductive material, and each clutching element (30) being moveable in a corresponding one of the holding recesses (12) toward the narrow end (121) of the corresponding holding recess (12) by an attraction of a corresponding one of the permanent magnets (20).

2. The unidirectional clutch device as claimed in claim 1, wherein each holding recess (12) has a mouth communicating with the axle hole (11) and a radial bottom away from and opposite the mouth and being inclined relative to a line (L) that is parallel with a tangent line (T) of the axle hole (11).

3. The unidirectional clutch device as claimed in claim 1, wherein the driving board (10) is made of a non-magnetic material; and
each holding recess (12) has a mouth communicating with the axle hole (11) and a radial bottom away from and opposite the mouth and being inclined relative to a line (L) that is parallel with a tangent line (T) of the axle hole (11).

4. The unidirectional clutch device as claimed in claim 2 or 3, wherein each clutching element (30) is spherical.

5. The unidirectional clutch device as claimed in claim 2 or 3, wherein each clutching element (30) is cylindrical.

6. The unidirectional clutch device as claimed in any one of claims 1 to 5, wherein the driving board (10) further has multiple magnet recesses (13) defined in the driving board (10) at positions respectively adjacent to the narrow ends (121) of the holding recesses (12); and
the permanent magnets (20) are mounted respectively in the magnet recesses (13).

7. The unidirectional clutch device as claimed in claim 6, wherein each magnet recess (13) is located at a position adjacent to the radial bottom of a corresponding one of the holding recesses (12).

8. The unidirectional clutch device as claimed in claim 6, wherein each magnet recess (13) is located at a position adjacent to the narrow end (121) and away from and opposite the long end (122) of a corresponding one of the holding recesses (12).

9. The unidirectional clutch device as claimed in claim 6, wherein each holding recess (12) is kept from being defined through the driving board (10) to form an axial bottom (14) in the holding recess (12); and
the magnet recesses (13) are defined respectively in the axial bottoms (14) of the holding recesses (12) at positions respectively adjacent to the narrow ends (121) of the holding recesses (12).
